# FASCICULE DE BREVET EUROPEEN

(11) **EP 1 122 848 B1**
(45) Date de publication et mention de la délivrance du brevet: **23.02.2011**
(21) Numéro de dépôt: 00403420.3
(22) Date de dépôt: 06.12.2000
(51) Int. Cl.: H02H 7/04, H01F 27/40

(54) **Dispositif de protection perfectionne contre les effects des défauts internes d'un transformateur triphase**
Verbesserte Vorrichtung zum Schutz gegen interne Fehler im Dreiphasen-Transformator
Improved device protecting against internal faults in a three-phase transformer

(30) Priorité: 31.01.2000 FR 0001188
(43) Date de publication de la demande: 08.08.2001
(73) Titulaire: SOCIETE NOUVELLE TRANSFIX TOULON, 46000 Cahors (FR)
(72) Inventeur: Faltermeier, Jean-Francis, 93210 Sollies-Toucas (FR)
(74) Mandataire: Novagraaf Technologies

(56) Documents cités:
- EP-A- 0 800 251
- EP-A- 0 817 346

## Description

L'invention concerne un perfectionnement d'un dispositif de protection contre les effets des défauts internes d'un appareil électrique qui est destiné à être immergé dans un liquide diélectrique contenu dans une cuve reliée à la terre et à un potentiel de référence de la partie active de l'appareil.

L'invention s'applique plus particulièrement à des transformateurs de distribution électrique destinés à une utilisation sur les réseaux triphasés moyenne tension en milieu rural.

Le brevet FR 2 750 809 décrit un dispositif de protection contre les effets des défauts internes d'un transformateur comprenant trois fusibles à percuteur montés chacun sur une phase, un système de déconnexion triphasé, ainsi qu'un moyen de détection des éventuels courants s'écoulant entre la phase en défaut et la terre. Un transformateur selon le préambule de la revendication 1 est connu de ce document.

La demanderesse a constaté que l'utilisation de trois fusibles moyenne tension dans un tel dispositif est surabondante pour l'élimination de défauts polyphasés isolés de la terre apparaissant dans le transformateur. En effet, deux fusibles au plus sont sollicités dans ce cas, le transit d'énergie ne pouvant plus se faire avec la seule phase passante.

Par ailleurs, le moyen de détection des courants de terre suffit pour éliminer les défauts monophasés tant que leur intensité ne dépasse pas environ 250 A, pour une tension entre phases assignée du réseau de l'ordre de 20 kV. Les valeurs indiquées ci-dessus sont approximatives et mentionnées uniquement à titre d'exemple.

En réalité, la présence d'un fusible équipant chaque phase du transformateur est justifiée dans deux cas :
- si le régime de neutre du réseau moyenne tension est tel que le courant de défaut monophasé peut être supérieur à des valeurs de l'ordre de 250 A, pour une tension entre phases assignée du réseau de l'ordre de 20 kV ;
- si la probabilité de l'occurrence de défauts doubles à la terre est suffisamment importante pour devoir être prise en compte.

Dans ce cas, si l'un des défauts transite dans le transformateur entre une première phase et la terre, et si le second défaut transite entre une seconde phase du réseau et la terre, en un point plus ou moins éloigné du transformateur, la valeur du courant de défaut dans le transformateur se rapproche de celle d'un défaut biphasé, et peut atteindre couramment 2000 A.

La présence d'un fusible sur chaque phase semble donc nécessaire pour parer à ces éventualités.

Toutefois, dans chacun des deux cas, on peut admettre que l'intensité du défaut à éliminer dépasse le pouvoir de coupure du système de déconnexion triphasé du transformateur et que ce système de déconnexion n'est pas apte à interrompre le passage de cette intensité.

En effet, les réseaux moyenne tension destinés à la distribution en milieu rural sont généralement protégés par des disjoncteurs situés au niveau du poste source haute tension / moyenne tension, ces disjoncteurs ayant pour particularité, en cas de défaut polyphasé ou monophasé, de fonctionner avec des cycles de déclenchement - réenclenchement au cas où le défaut serait de nature fugitive.

Dans ce cas, le rôle du système de déconnexion triphasé peut se limiter à celui d'un sectionneur qui assure l'isolation du transformateur lors du retour de la tension sous l'effet du premier réenclenchement du disjoncteur du poste source.

On voit donc que le dispositif suffit à assurer l'élimination du défaut dans le transformateur, et que la perturbation vue par le réseau moyenne tension se limite à un cycle de déclenchement - réenclenchement rapide, donc peu pénalisant pour la qualité de la distribution d'énergie.

Durant l'ouverture du système de déconnexion lors d'un courant de défaut supérieur à son pouvoir de coupure, l'arc électrique s'étire entre les deux pièces de contact qui se séparent sans conséquence pour l'intégrité du transformateur compte tenu de la faible durée du phénomène, correspondant au délai d'ouverture du disjoncteur (de 100 à 300 ms).

Ainsi, il est possible d'envisager une évolution du dispositif de protection contre les défauts internes d'un transformateur tel que décrit dans le brevet FR 2 750 809 dans les cas suivants :
- si le régime de neutre du réseau moyenne tension est impédant et limite le courant de défaut monophasé à moins de 250 A, et si la probabilité d'occurrence d'un défaut double sur le réseau transitant par le transformateur est considérée comme suffisamment faible pour être négligeable ;
- si le disjoncteur situé au poste source duquel dépend le réseau d'alimentation fonctionne selon des cycles de déclenchement-réenclenchement.

Le but de l'invention est de perfectionner le dispositif décrit dans le document FR 2 750 809 de manière à réduire l'encombrement du transformateur et à réaliser des économies substantielles lors de la fabrication et de l'utilisation de ce transformateur.

Document EP-A-0800251 propose d'arranger un moyen de déconnexion uniquement dans deux des trois phases d'alimentation.

A cet effet, l'invention propose un dispositif de protection contre des effets des défauts internes d'un transformateur de distribution triphasé, ledit transformateur étant destiné à être immergé dans un liquide diélectrique contenu dans une cuve reliée à la terre et à une masse de la partie active du transformateur.

Ce transformateur comprend :
- un système de déconnexion desdites phases comportant d'une part des moyens de déconnexion branchés en série respectivement avec chaque phase, et d'autre part un système de blocage en position connectée, ledit système de blocage comportant des premiers moyens de blocage couplés respectivement aux moyens de déconnexion,
- un moyen de détection d'un courant de terre circulant entre la terre et la masse de la partie active du transformateur.

Le moyen de détection du courant de terre commande le système de blocage lorsqu'un courant de terre est détecté de sorte que le système de déconnexion est placé en position déconnectée.

Suivant l'invention, ce dispositif est caractérisé en ce que seuls deux moyens de déconnexion comprennent un élément de sécurité.

De préférence, seuls lesdits deux moyens de déconnexion comportant un élément de sécurité sont montés dans un boîtier isolant.

De préférence également, lesdits boîtiers isolants sont positionnés à l'intérieur de la cuve dans les espaces compris entre deux enroulements de phase du transformateur et une paroi latérale de la cuve.

La phase ne comportant pas d'élément de sécurité est de préférence la phase médiane et comprend un simple conducteur reliant la traversée amont correspondante du transformateur et le premier moyen de blocage correspondant, ledit conducteur étant positionné à l'intérieur de la cuve entre la paroi latérale de la cuve et l'enroulement de phase correspondant.

Selon un deuxième aspect, l'invention se rapporte également à un transformateur triphasé de distribution d'énergie électrique moyenne tension destiné à être immergé dans un liquide diélectrique contenu dans une cuve et comportant un tel dispositif de protection.

Dans le cas d'un transformateur triphasé comportant des traversées moyenne tension en porcelaine, les traversées correspondant aux deux phases munies d'un élément de sécurité sont électriquement reliées audit élément de sécurité correspondant par un conducteur pénétrant dans le boîtier et raccordé à un contact positionné sur l'amont de l'élément de sécurité.

D'autres particularités et avantages de l'invention apparaîtront encore dans la description ci-après, en référence aux dessins annexés :
- la figure 1 est une représentation schématique d'un transformateur comportant un dispositif selon l'invention ;
- la figure 2 est une représentation schématique en coupe transversale d'un transformateur comportant un dispositif de protection conforme à l'art antérieur ;
- la figure 3 est une représentation schématique en coupe transversale d'un transformateur comportant un dispositif de protection selon l'invention ;
- la figure 4 est une vue en élévation de l'intérieur d'un transformateur comprenant un dispositif de protection selon l'invention ;
- la figure 5 est une vue partielle de l'intérieur d'un transformateur équipé de traversées en porcelaine et comprenant un dispositif de protection selon l'invention.

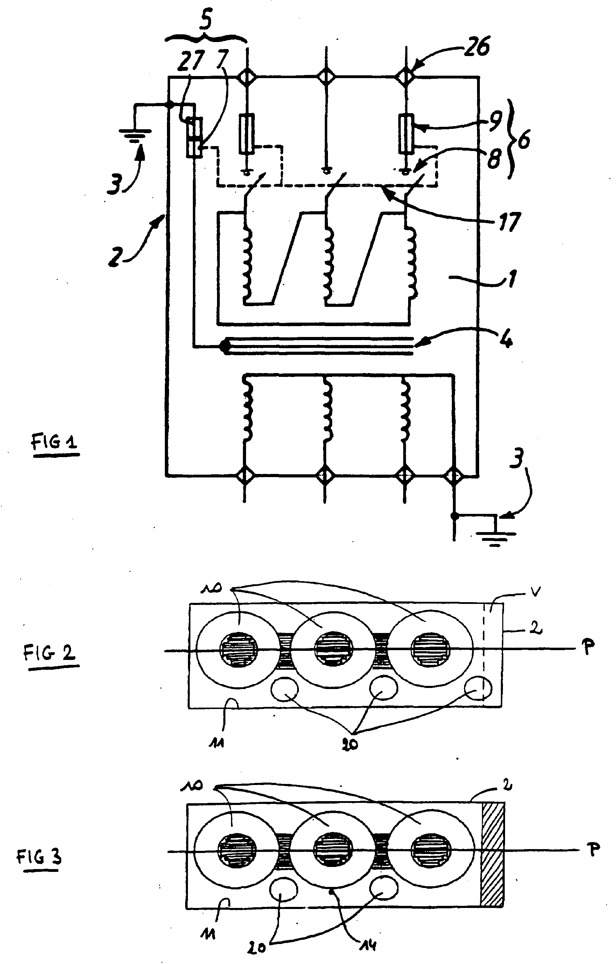

Comme représenté schématiquement sur la figure 1, le transformateur 1 à protéger est immergé dans un liquide diélectrique contenu dans une cuve 2, ladite cuve 2 étant reliée à la terre 3 et à une masse de la partie active 4 du transformateur 1.

Le transformateur 1 est équipé de raccordements moyenne tension par traversées embrochables 26.

Le dispositif de protection du transformateur 1 comporte un moyen de détection 5 du courant de terre circulant entre la terre 3 et la masse de la partie active 4.

Ce moyen de détection 5 est destiné à provoquer la déconnexion des phases du transformateur lorsqu'un courant de terre, à savoir entre partie active 4 et terre 3, est détecté.

A cet effet, le dispositif de protection selon l'invention comporte un système de déconnexion des phases du transformateur 1 comportant des moyens de déconnexion 6 branchés en série respectivement avec les phases alimentant le transformateur 1.

Ces moyens de déconnexion 6 comportent chacun un premier moyen de blocage 8 couplé au moyen de déconnexion et verrouillant les moyens de déconnexion 6 en position connectée.

En outre, le moyen de détection 5 comporte un deuxième moyen de blocage 7 couplé aux premiers moyens de blocage 8, ainsi qu'un fusible 27 connecté entre la cuve 2 et la masse de la, partie active 4 du transformateur 1. Le couplage entre les premiers et deuxième moyens de blocage 7 et 8 peut par exemple être mécanique, par l'intermédiaire d'un axe commun 17.

Ainsi, par l'intermédiaire du deuxième moyen de blocage 7, le moyen de détection 5 du courant de terre commande les premiers moyens de blocage 8 lorsqu'un courant de terre est détecté de sorte que les moyens de déconnexion 6 sont placés en position déconnectée.

Les premiers moyens de blocage 8 de chaque moyen de déconnexion 6 étant couplés entre eux (par exemple par le même axe 17), on obtient une déconnexion simultanée de toutes les phases du transformateur 1.

Comme illustré par la figure 1, les moyens de déconnexion 6, les premiers 8 et deuxième 7 moyens de blocage et le moyen de détection 5 sont disposés à l'intérieur de la cuve 2.

Suivant le mode de réalisation représenté, deux des trois moyens de déconnexion 6 comportent chacun un élément de sécurité et de détection 9 qui est connecté entre la phase alimentant le transformateur 1 correspondante et le premier moyen de blocage 8 correspondant.

Selon l'invention les éléments de sécurité et de détection 9 sont des fusibles, équipés de percuteurs disposés dans la cuve 2.

Généralement, chaque moyen de déconnexion 6, incluant le premier moyen de blocage 8 et le fusible le cas échéant, est monté dans un boîtier 20 isolant et étanche dans sa partie supérieure.

En effet, l'étanchéité des boîtiers 20 permet la conservation du diélectrique autour du fusible 9 dans le cas d'une baisse de niveau dans le cuve 2 due par exemple à une fuite. Les boîtiers 20 ont ainsi pour fonction de maintenir l'intégrité de l'isolation.

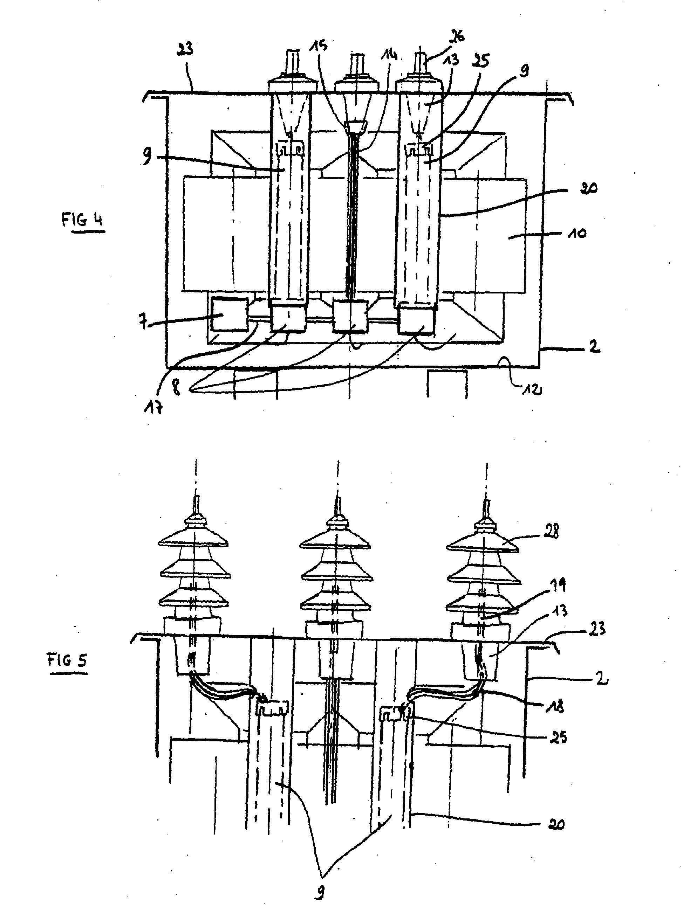

Dans la réalisation représentée sur la figure 4, les boîtiers 20 sont constitués d'un tube isolant sur la partie supérieure duquel une bride assure le maintien mécanique du boîtier 20 sous le couvercle 23 du transformateur.

L'étanchéité entre le boîtier 20 et le couvercle 23 est réalisée, par exemple, par un joint torique.

Un contact 25, par exemple de type "tulipe", assure la liaison entre l'amont du fusible 9 et la traversée moyenne tension embrochable 26 du transformateur 1. Le boîtier 20 englobe également la queue 13 de la traversée 26 correspondante.

La figure 2 illustre le positionnement des trois boîtiers 20 à l'intérieur de la cuve 2, selon le dispositif de l'art antérieur.

Deux des trois fusibles et les boîtiers 20 qui les contiennent sont situés dans la cuve 2 dans l'espace compris entre deux enroulements de phase 10 et une paroi latérale 11 de la cuve 2.

Par « paroi latérale », on entend une des deux parois qui sont perpendiculaires au fond 12 de la cuve 2 et qui sont parallèles au plan P incluant les axes de révolution des enroulements de phase 10. Le troisième boîtier 20, pour être placé dans la cuve 2, implique un supplément de volume V de la cuve 2, comme le montre la figure 2.

Les figures 3 et 4 représentent le positionnement des trois phases alimentant un transformateur comportant un dispositif de protection selon l'invention. Comme on va maintenant l'expliquer, la disposition est optimisée de façon à réduire l'encombrement de l'appareil.

Deux des boîtiers 20, correspondant à deux des trois phases, sont positionnés, comme précédemment, dans l'espace compris entre deux enroulements de phase 10 et une paroi latérale 11 de la cuve 2.

La troisième phase n'étant pas munie d'un fusible, la traversée 26 correspondante est directement prolongée par un conducteur 14 entouré d'un isolant 15 qui recouvre également les parties sous tension de l'extrémité inférieure de ladite traversée 26. Ainsi, l'isolement de ladite partie sous tension est assuré même en l'absence de diélectrique liquide, consécutive à une fuite par exemple.

De préférence, la phase non munie d'un fusible sera la phase médiane, c'est-à-dire la phase alimentant le transformateur 1 par la traversée 26 médiane.

Ce conducteur 14, du fait de son faible encombrement, peut être placé entre la paroi latérale 11 de la cuve 2 et un enroulement 10, comme représenté sur la figure 3.

Ainsi, cette nouvelle configuration permet de réduire les dimensions de la cuve 2. Le gain par rapport au dispositif de l'art antérieur est représenté sur la figure 3 par la partie hachurée.

L'invention permet donc :
- d'économiser un fusible moyenne tension et les moyens d'isolement qui lui sont associés, ce qui représente une part significative du coût du dispositif global de protection ;
- de réduire le volume de la cuve, ce qui se traduit également par une diminution de la quantité de diélectrique nécessaire.

On comprend que l'espacement des boîtiers 20 est imposé par la position des enroulements de phase 10.

En référence à la figure 5, dans le cas d'un transformateur 1 équipé de traversées en porcelaine 28 et raccordés à un réseau aérien en conducteur nu, l'espacement des traversées 28 est imposé par le niveau de tension du réseau.

Généralement, l'espacement des traversées 28 est supérieur à l'espacement autorisé des boîtiers 20. Dans ce cas, la liaison électrique entre les traversées en porcelaine 28 et le fusible 9 est assurée par un câble isolé 18 connecté d'une part à une tige conductrice 19 interne à la traversée 28, et d'autre part à la tulipe 25 liée à l'amont du fusible 9. Ce câble 18 traverse la paroi du boîtier 20.

Dans les deux cas précédents, l'isolement des parties sous moyenne tension situées en amont du dispositif de protection est assuré même en l'absence de diélectrique liquide, ce qui supprime tout risque de défaut électrique qui ne serait pas éliminé par ce dispositif, y compris dans le cas d'un défaut d'étanchéité de la cuve 2.

## Revendications

1. Transformateur de distribution (1) triphasé étant destiné à être immergé dans un liquide diélectrique contenu dans une cuve (2) reliée à la terre (3) et à une masse de la partie active (4) dudit transformateur (1) et comportant un dispositif de protection contre des effets des défauts internes comprenant :
- un système de déconnexion de phases comportant des moyens de déconnexion (6) branchés en série respectivement avec chaque phase, chaque moyen de déconnexion (6) comportant un moyen de blocage (8) en position connectée,
- un moyen de détection (5) d'un courant de terre circulant entre la terre (3) et la masse de la partie active (4) du transformateur (1), le moyen de détection du courant de terre commandant les moyens de blocage (8) lorsqu'un courant de terre est détecté de sorte que les moyens de blocage (8) sont placés en position déconnectée,
**caractérisé en ce que** seuls deux moyens de déconnexion (6) comportent chacun un fusible équipé d'un percuteur (9) connecté entre la phase alimentant le transformateur (1) et le moyen de blocage (8) correspondant.

2. Transformateur selon la revendication 1, dans lequel les deux moyens de déconnexion (6) comportant un fusible équipé d'un percuteur (9) sont respectivement montés dans un boîtier (20) isolant.

3. Transformateur selon la revendication 2, dans lequel les deux boîtiers isolants (20) sont positionnés à l'intérieur de la cuve (2) dans les espaces compris entre deux enroulements de phase (10) du transformateur (1) et une paroi latérale (11) de la cuve (2).

4. Transformateur selon l'une quelconque des revendications 1 à 3, **caractérisé en ce que** le moyen de déconnexion (6) ne comprenant pas de fusible équipé d'un percuteur (9) est branché sur la phase médiane.

5. Transformateur selon l'une quelconque des revendications 1 à 4, **caractérisé en ce que** la phase ne comportant pas de fusible équipé d'un percuteur (9) comprend un simple conducteur (14) reliant la traversée amont (26) correspondante du transformateur (1) et le premier moyen de blocage (8) correspondant, ledit conducteur (14) étant positionné à l'intérieur de la cuve (2) entre la paroi latérale (11) de la cuve (2) et l'enroulement de phase correspondant.

6. Transformateur selon la revendication 5 comportant des traversées moyenne tension en porcelaine (28), dans lequel les traversées correspondant aux deux phases munies d'un fusible équipé d'un percuteur (9) sont électriquement reliées audit fusible équipé d'un percuteur (9) correspondant par un conducteur pénétrant dans le boîtier (20) et raccordé à un contact (25) positionné sur l'amont du fusible équipé d'un percuteur (9).

## Claims

1. A three-phase distribution transformer (1) intended to be immersed in a dielectric liquid contained in a tank (2) connected to the earth (3) and to a mass of the active part (4) of said transformer (1), and including a protection device against the effects of internal faults including :
- a phase disconnection system including disconnection means (6) connected in series with each phase respectively, with each disconnection means (6) including locking means (8) in a connected position,
- means (5) for detecting an earth current circulating between the earth (3) and the mass of the active part (4) of the transformer (1), with the means for detecting the earth current controlling the locking means (8) when an earth current is detected, so that the locking means (8) is placed in a disconnected position,
**characterized in that** only two connection means (6) each include a fuse provided with a striker (9) connected between the phase supplying the transformer (1) and the corresponding locking means (8).

2. A transformer according to claim 1, wherein the two disconnection means (6) including a fuse provided with a striker (9) are respectively mounted in a joint casing (20).

3. A transformer according to claim 2, wherein the two joint casings (20) are positioned inside the tank (2) in the spaces existing between two phase windings (10) of the transformer (1) and a side wall (11) of the tank (2).

4. A transformer according to any one of claims 1 to 3, **characterized in that** the disconnection means (6) including no fuse provided with a striker (9) is connected to the medium branch.

5. A transformer according to any one of claims 1 to 4, **characterized in that** the phase including no fuse provided with a striker (9) includes a simple conductor (14) connecting the corresponding upstream bushing (26) of the transformer (1) and the corresponding first locking means (8), with said conductor (14) being positioned inside the tank (2) between the side wall (11) of the tank (2) and the corresponding phase winding.

6. A transformer according to claim 5, including medium voltage bushings made of china (28), wherein the bushings corresponding to the two phases equipped with a fuse provided with a striker (9) are electrically connected to said corresponding fuse provided with a striker (9) by means of a conductor entering the casing (20) and connected to a contact (25) positioned upstream of the fuse provided with a striker (9).

## Patentansprüche

1. Dreiphasen-Verteilertransformator (1), der in eine Isolierflüssigkeit in einem Gefäß (2) eingetaucht werden soll, das an die Erdung (3) und an eine Masse des aktiven Teils (4) des besagten Transformators (1) angeschlossen ist und eine Schutzvorrichtung gegen Auswirkungen innerer Mängel umfaßt, und der folgende Teile umfaßt:
- ein System zur Phasenabschaltung mit Abschaltmitteln (6), die in Reihe jeweils mit jeder Phase angeschlossen sind, wobei jedes Abschaltmittel (6) ein Sperrmittel (8) in angeschlossener Position umfaßt,
- ein Mittel zur Entdeckung (5) eines Erdungsstroms, der zwischen der Erdung (3) und der Masse des aktiven Teils (4) des Transformators (1) zirkuliert, wobei das Entdeckungsmittel für den Erdungsstrom die Sperrmittel (8) steuert, wenn ein Erdungsstrom entdeckt wird, so daß die Sperrmittel (8) in abgeschaltete Position versetzt werden,
**dadurch gekennzeichnet, daß** nur zwei Abschaltmittel (6) jeweils eine Schmelzsicherung umfassen, die mit einem Schlagstift (9) ausgerüstet ist, der zwischen der Phase, die den Transformator (1) speist, und dem entsprechenden Sperrmittel (8) angeschlossen ist.

2. Transformator nach Anspruch 1, **dadurch gekennzeichnet, daß** die beiden Abschaltmittel (6), die eine Schmelzsicherung umfassen, die mit einem Schlagstift (9) ausgerüstet ist, jeweils in einem Isoliergehäuse (20) montiert sind.

3. Transformator nach Anspruch 2, **dadurch gekennzeichnet, daß** die beiden Isoliergehäuse (20) im Innern des Gefäßes (2) in den Räumen plaziert sind, die sich zwischen zwei Phasenwicklungen (10) des Transformators (1) und einer Seitenwand (11) des Gefäßes (2) befinden.

4. Transformator nach einem beliebigen der vorstehenden Ansprüche 1 bis 3, **dadurch gekennzeichnet, daß** das Abschaltmittel (6), das keine mit einem Schlagstift (9) ausgerüstete Schmelzsicherung umfaßt, an der medianen Phase angeschlossen ist.

5. Transformator nach einem beliebigen der vorstehenden Ansprüche 1 bis 4, **dadurch gekennzeichnet, daß** die Phase, die keine mit einem Schlagstift (9) ausgerüstete Schmelzsicherung umfaßt, einen einfachen Leiter (14) umfaßt, der die entsprechende vorgeschaltete Durchführung (26) des Transformators (1) und das erste entsprechende Sperrmittel (8) verbindet, wobei der besagte Leiter (14) im Innern des Gefäßes (2) zwischen der Seitenwand (11) des Gefäßes (2) und der entsprechenden Phasenwicklung positioniert ist.

6. Transformator nach Anspruch 5, der Durchführungen für Mittelspannung aus Porzellan (28) umfaßt, in dem die Durchführungen, die den beiden Phasen entsprechen, die mit einer Schmelzsicherung versehen sind, die mit einem Schlagstift (9) ausgerüstet ist, elektrisch mit der besagten mit einem entsprechenden Schlagstift (9) ausgerüsteten Schmelzsicherung durch einen Leiter verbunden sind, der in das Gehäuse (20) eintritt und an einen Kontakt (25) angeschlossen ist, der vor der mit einem Schlagstift (9) ausgerüsteten Schmelzsicherung positioniert ist.
